# EUROPÄISCHE PATENTANMELDUNG

(11) **EP 4 032 787 A1**
(43) Veröffentlichungstag der Anmeldung: **27.07.2022**
(21) Anmeldenummer: 21202587.8
(22) Anmeldetag: 14.10.2021
(51) Int. Cl.: B62D 49/06

(54) **LANDWIRTSCHAFTLICHE ARBEITSMASCHINE SOWIE BEDIENEINRICHTUNG**

(30) Priorität: 26.01.2021 DE 102021101670
(71) Anmelder: CLAAS Tractor S.A.S., 78141 Vélizy-Villacoublay Cedex (FR)
(72) Erfinder: Garcia, Remi, 92260 Fontenay-Aux-Roses (FR); Roger, Fabien, 75019 Paris (FR); Renaud, Jeremy, 27310 Bourg Achard (FR); Bourry, Pierre, 72000 Le Mans (FR)
(74) Vertreter: CLAAS Gruppe

(57) **Zusammenfassung**

Die Erfindung betrifft eine landwirtschaftliche Arbeitsmaschine (1), insbesondere in Form eines Traktors. Die landwirtschaftliche Arbeitsmaschine (1) umfasst ein in Form eines Fronthubwerks (3) ausgebildetes Hubwerk (2), ein in Form eines Heckhubwerks (4) ausgebildetes Hubwerk (2) sowie eine Bedieneinrichtung (5).

Erfindungsgemäß umfasst die Bedieneinrichtung (5) ein Bedienelement (6) zur Bedienung beider Hubwerke (2), wobei die Bedieneinrichtung (5) mindestens einen Auswahlschalter (7) umfasst, mittels dessen ein Fokus des Bedienelements (6) zwischen den Hubwerken (2) umschaltbar ist, und wobei die Bedieneinrichtung (5) mindestens ein Visualisierungselement (8) umfasst, mittels dessen eine aktuelle Hubstellung des aktiven Hubwerks (2), auf dem der Fokus des Bedienelements (6) liegt, visualisierbar ist.

Außerdem betrifft die Erfindung eine Bedieneinrichtung (5).

## Beschreibung

Die vorliegende Erfindung betrifft eine landwirtschaftliche Arbeitsmaschine gemäß dem Oberbegriff von Anspruch 1 sowie eine Bedieneinrichtung gemäß dem Oberbegriff von Anspruch 9.

Die landwirtschaftliche Arbeitsmaschine ist insbesondere dazu eingerichtet, als Zugmaschine von landwirtschaftlichen Maschinen beziehungsweise Anbaugeräten zur landwirtschaftlichen Bestellung von Feldern eingesetzt zu werden. Dazu wird das Anbaugerät mit der landwirtschaftlichen Arbeitsmaschine verbunden, beispielsweise mittels einer Kupplung. Als ein übliches Anbaugerät ist beispielsweise eine Ballenpressen zu nennen.

Die landwirtschaftliche Arbeitsmaschine umfasst ein in Form eines Fronthubwerks ausgebildetes Hubwerk, ein in Form eines Heckhubwerks ausgebildetes Hubwerk sowie eine Bedieneinrichtung. Bei der landwirtschaftlichen Arbeitsmaschine kann es sich insbesondere um einen Traktor handeln.

Das Hubwerk, welches häufig auch als Dreipunkt-Kraftheber oder Dreipunkthydraulik bezeichnet wird, ist eine hydraulische Vorrichtung an dem Traktor, um ein Anbaugerät ankuppeln beziehungsweise anheben zu können. Die Bezeichnung "Dreipunkt" rührt daher, dass die Vorrichtung üblicherweise mittels dreier Befestigungspunkte am Traktor befestigt ist. Bei einer einfachen Ausführung des Hubwerks kann die Abwärtsbewegung desselben durch ein Eigengewicht beziehungsweise durch ein Gewicht des Anbaugeräts erfolgen. Andernfalls und üblicherweise ist das Hubwerk hydraulisch betrieben beziehungsweise betreibbar.

Landwirtschaftliche Arbeitsmaschinen der vorstehend beschriebenen Art sind im Stand der Technik bereits bekannt. Da insbesondere moderne landwirtschaftliche Arbeitsmaschinen mit diverser Technik ausgestattet sind, kann es vorteilhaft sein, Steuerungseinrichtungen beziehungsweise Anzeigeeinrichtungen zur Steuerung beziehungsweise Überwachung der Technik in einem Arbeitsbereich des Fahrers zu integrieren. Der DE 10 2006 046 646 A1 ist eine Anzeigeneinheit mit Anzeigefeldern zur Visualisierung von Fahrzeuginformationen für einen Einsatz in Fahrzeugen mit verschwenkbarem Fahrersitz oder Fahrerkabine als bekannt zu entnehmen. Hierbei erfolgt mit dem Verschwenken des Fahrersitzes oder der Fahrerkabine ein die jeweilige Lageposition des Fahrersitzes oder der Fahrerkabine berücksichtigendes Vertauschen der Anzeigefelder auf der Anzeigeeinheit. Hierdurch wird sichergestellt, dass trotz des Verschwenkens des Fahrersitzes oder der Fahrerkabine die Wahrnehmung beziehungsweise Orientierung auf der Anzeige durch den Bediener nicht verändert wird. Mit anderen Worten wird die Bedienung für den Fahrer erleichtert und Fehlbedienungen können hierdurch verhindert werden.

Gerade bei modernen landwirtschaftlichen Arbeitsmaschinen muss der Fahrer zum Führen und Bedienen derselben mehrere Anzeigeeinheiten beziehungsweise Bedieneinrichtungen, insbesondere gleichzeitig, im Blick halten. Dies trifft insbesondere dann zu, wenn die landwirtschaftliche Arbeitsmaschine durch das Anbaugerät erweitert wird, wie dies beispielsweise bei landwirtschaftlichen Arbeiten auf einem Feld üblich ist. In diesem Fall sind durch den Fahrer mittels der Anzeigeeinheiten beziehungsweise Bedieneinrichtungen sowohl die landwirtschaftliche Arbeitsmaschine als auch das Anbaugerät zu überwachen. Dies ist für den Fahrer eine sehr anspruchsvolle Aufgabe und erfordert ständig ein hohes Maß an Aufmerksamkeit und Konzentration.

Der vorliegenden Anmeldung liegt demzufolge die Aufgabe zugrunde, eine landwirtschaftliche Arbeitsmaschine bereitzustellen, deren Bedienung besonders einfach und besonders fehlerarm möglich ist.

Die zugrunde liegende Aufgabe wird erfindungsgemäß mittels einer landwirtschaftlichen Arbeitsmaschine mit den Merkmalen des Anspruchs 1 sowie mittels einer Bedieneinrichtung mit den Merkmalen des Anspruchs 9 gelöst. Vorteilhafte Ausgestaltungen ergeben sich aus den zugehörigen Unteransprüchen.

Die erfindungsgemäße landwirtschaftliche Arbeitsmaschine ist dadurch gekennzeichnet, dass die Bedieneinrichtung ein Bedienelement zur Bedienung beider Hubwerke umfasst. Die Bedieneinrichtung umfasst mindestens einen Auswahlschalter, mittels dessen ein Fokus des Bedienelements zwischen den Hubwerken umschaltbar ist. Außerdem umfasst die Bedieneinrichtung mindestens ein Visualisierungselement, mittels dessen eine aktuelle Hubstellung des aktiven Hubwerks, auf dem der Fokus des Bedienelements liegt, visualisierbar ist.

Die einfach auch als Arbeitsmaschine bezeichnete landwirtschaftliche Arbeitsmaschine bringt viele Vorteile mit sich. Einerseits kann der Fahrer der Arbeitsmaschine selbige besonders einfach bedienen. Der Fahrer kann mittels der Bedieneinrichtung, welche das Bedienelement zur Bedienung beider Hubwerke umfasst, beide Hubwerke bedienen. Hierzu umfasst die Bedieneinrichtung einen Auswahlschalter, mittels welches der Fahrer auswählen kann, welches der Hubwerke er bedienen möchte. Mit anderen Worten kann der Fahrer den Auswahlschalter betätigen und somit auswählen, ob er das Fronthubwerk oder das Heckhubwerk bedienen möchte. Der Auswahlschalter kann beispielsweise zwei Druckknöpfe umfassen, die alternativ aktivierbar sind, wobei jeweils einer der Druckknöpfe einem der Hubwerke zugeordnet ist. Die Druckknöpfe können optische Rückmeldemittel umfassen, anhand derer dem Maschinenführer anzeigbar ist, welcher Druckknopf aktuell "aktiv" geschaltet ist und somit auf welchem der Hubwerke aktuell der Fokus liegt.

Damit der Fahrer während der Bedienung nicht durcheinander kommt, welches der Hubwerke er gerade mittels des Auswahlschalters ausgewählt hat und somit bedient, umfasst die Bedieneinrichtung das mindestens eine Visualisierungselement. Mittels dieses Visualisierungselements ist eine aktuelle Hubstellung des aktiven Hubwerks, auf dem ein Fokus des Bedienelements liegt, visualisierbar. Das Visualisierungselement kann beispielsweise in Form einer optischen Anzeige ausgebildet sein.

Da der Fahrer somit lediglich die eine Bedieneinrichtung bedienen und im Blick halten muss, ist eine besonders einfache Bedienung bereitgestellt. Hierdurch ergibt sich andererseits zusätzlich der Vorteil, dass die Bedienung besonders fehlerarm erfolgt, da die Anforderungen an die Konzentration des Fahrers durch eine reduzierte Komplexität der Bedienung besonders geringgehalten werden können.

In einer vorteilhaften Ausgestaltung der erfindungsgemäßen landwirtschaftlichen Arbeitsmaschine ist vorgesehen, dass das Bedienelement von einem Drehschalter gebildet ist, wobei vorzugsweise der Drehschalter als inkrementeller Drehschalter oder Endlosdrehschalter ausgebildet ist. Insbesondere hat sich herausgestellt, dass der Drehschalter besonders robust einsetzbar ist. Beim Betreiben der landwirtschaftlichen Arbeitsmaschine sind üblicherweise Verschmutzungen, beispielsweise Staub oder Dreck, nicht zu vermeiden. Mit anderen Worten ist der Drehschalter auch in einem verschmutzen Milieu besonders zuverlässig einsetzbar. Außerdem ist der Drehschalter aufgrund seiner hinlänglich bekannten Funktionsweise, nämlich durch Drehen, besonders intuitiv bedienbar.

In einer weiteren vorteilhaften Ausgestaltung der erfindungsgemäßen landwirtschaftlichen Arbeitsmaschine ist vorgesehen, dass das Visualisierungselement eine Lichtleiste umfasst, mittels der die aktuelle Hubstellung des jeweils aktiven Hubwerks anzeigbar ist, wobei vorzugsweise die Lichtleiste einen sich zwischen gegensätzlich Endstellungen des aktiven Hubwerks befindlichen gesamten Arbeitsbereich desselben unterteilt in eine Mehrzahl von Stellungsschritten visualisiert. Das jeweilige Hubwerk ist vorzugsweise zwischen einer als Straßenbetriebsposition bezeichneten oberen Endstellung, in welcher das Hubwerk zum Schutze desselben im Wesentlichen maximal angehoben ist, und einer als Arbeitsposition bezeichneten unteren Endstellung, in welcher das Hubwerk zum Ankoppeln des Anbaugeräts im Wesentlich maximal abgesenkt ist, insbesondere stufenlos, verstellbar. Die Lichtleiste charakterisiert demzufolge die aktuelle Hubstellung des jeweiligen Hubwerks. Mit anderen Worten zeigt die Lichtleiste an, in welcher Hubstellung sich das jeweilige Hubwerk aktuell befindet. Hierdurch ergibt sich der Vorteil, dass der Fahrer die aktuelle Hubstellung der Hubwerke besonders übersichtlich und einfach erfahren kann. Dies wird insbesondere durch die Mehrzahl von Stellungsschritten beziehungsweise Abschnitten der Lichtleiste möglich, da der Fahrer eine Skalierung der Lichtleiste besonders einfach und genau abschätzen kann.

Zudem ist es in einer vorteilhaften Ausgestaltung der erfindungsgemäßen landwirtschaftlichen Arbeitsmaschine vorgesehen, dass das Visualisierungselement eine Mehrzahl von balkenartig oder kreisbogenartig nebeneinander angeordneten Leuchtmitteln umfasst, wobei vorzugsweise jedes Leuchtmittel mit einem Stellungsschritt des aktiven Hubwerks korrespondiert. Insbesondere ist es denkbar, dass die Leuchtmittel derart zueinander angeordnet beziehungsweise ausgerichtet sind, dass durch eine Gesamtheit der Leuchtmittel ein gesamter Arbeitsbereich der Hubwerke abgebildet wird. Mit anderen Worten sind die Leuchtmittel entsprechend einem Verlauf angeordnet, der durch die Hubwerke realisiert werden kann. Hierdurch ergibt sich der Vorteil, dass die aktuelle Hubstellung des jeweiligen Hubwerks besonders einfach erkennbar ist.

In einer weiteren vorteilhaften Ausgestaltung der erfindungsgemäßen landwirtschaftlichen Arbeitsmaschine ist vorgesehen, dass das Visualisierungselement ein durchgängiger Bildschirm, insbesondere ein Liquid Crystal Display (LCD), ist. Mit anderen Worten ist das Visualisierungselement gemäß dieser Ausgestaltung nicht in einzelne Komponenten aufgeteilt.

Weiterhin ist es in einer vorteilhaften Ausgestaltung der erfindungsgemäßen landwirtschaftlichen Arbeitsmaschine vorgesehen, dass das Visualisierungselement eine numerische Wiedergabe zur Wiedergabe von Zahlenwerten, insbesondere Prozentangaben oder Winkelangaben, umfasst. Für bestimmte Anwendungen, beispielsweise zum Ankuppeln des Anbaugeräts, kann es notwendig sein, das Hubwerk besonders exakt zu positionieren. Hierfür reicht eine ungefähre Angabe der Hubstellung, wie dies beispielsweise durch die Lichtleiste möglich ist, womöglich nicht aus. Außerdem kann der Fahrer sich den Zahlenwert besonders einfach merken oder notieren, um ihn für einen wiederholten Anwendungsfall erneut nutzen zu können. Durch die zusätzliche Wiedergabe von Zahlenwerten wird es dem Fahrer ermöglicht, das Hubwerk besonders präzise und reproduzierbar auszurichten.

Die beschriebene Ausgestaltung ist dann überdies von Vorteil, wenn das Visualisierungselement dazu geeignet ist, eine aktuelle Auswahl eines der Hubwerke zur Bedienung mittels des Bedienelements visuell, insbesondere mittels des Wechsels einer Farbe mindestens eines mehrfarbigen Leuchtmittels, anzuzeigen. Mit anderen Worten kann jedem der Hubwerke eine individuelle Farbe zugeordnet werden. Insbesondere ist die Farbe des Leuchtmittels selbst mittels eines peripheren Blicks wahrnehmbar. Der Fahrer muss somit seine Aufmerksamkeit nicht dem Leuchtmittel zuwenden, um zu erfahren, welches Hubwerk ausgewählt ist. Hierdurch ergibt sich der Vorteil, dass dem Fahrer anstrengungslos ersichtlich ist, welches Hubwerk zur Bedienung ausgewählt ist.

Zudem ist es in einer vorteilhaften Ausgestaltung der erfindungsgemäßen landwirtschaftlichen Arbeitsmaschine vorgesehen, dass mindestens eine Speichereinheit vorgesehen ist, mittels der mindestens eine Stellungsinformation betreffend eine Hubstellung mindestens eines der Hubwerke speicherbar oder gespeichert ist. Die Möglichkeit des Abspeicherns von Stellungsinformationen hat mehrere Vorteile. Zum einen ermöglicht es der Bedieneinrichtung, mittels des Visualisierungselements beim Umschalten auf eines der Hubwerke eine Stellungsinformation anzuzeigen, die die Stellung des jeweiligen Hubwerks zum Zeitpunkt der letztmaligen Umschaltung auf das andere Hubwerk hatte. Auf diese Weise ist es besonders einfach möglich, dass die Visualisierungseinrichtung immer die aktuelle Hubstellung der Hubwerke wiedergibt. Weiterhin kann die Abspeicherung von Stellungsinformationen zum Vorteil haben, dass der Maschinenführer bestimmte Hubstellungen zwischenspeichert, um diese zu einem späteren Zeitpunkt automatisiert wieder anzufahren. Insbesondere beim Ankoppeln von Anbaugeräten kann es notwendig sein, das Hubwerk in Abhängigkeit von dem Anbaugerät besonders präzise auszurichten. Mittels der Speichereinheit lässt sich somit die Stellungsinformation abspeichern, welche beispielsweise mit dem jeweiligen Anbaugerät korrespondiert. Beim Ankoppeln ist demzufolge die erforderliche Hubstellung des jeweiligen Hubwerks direkt erzielbar. Vorteilhafterweise ergibt sich hierdurch ein besonders schneller und effizienter Betrieb.

Auch ist es denkbar, dass die Bedieneinrichtung von einem Dreh-Drückschalter gebildet ist, der zusätzlich zu der Funktionalität eines reinen Drehschalters auch die Funktion eines Drückschalters, insbesondere eines Tasters, aufweist. Auf diese Weise können das Bedienelement und der Auswahlschalter in einem Bauteil vereint werden, wobei sinngemäß das Bedienelement von dem Drehschalter und der Auswahlschalter von dem Druckschalter gebildet sind. Bei Ausbildung des Druckschalters als Taster kann beispielsweise mit jeder Betätigung der Fokus des Bedienelements von dem einen auf das andere Hubwerk umgeschaltet werden. In diesem Zusammenhang ist es insbesondere vorteilhaft, wenn durch ein Drücken des Dreh-Drückschalters eine aktuelle Hubstellung des Hubwerks gespeichert wird. Alternativ oder zusätzlich ist es außerdem denkbar, dass durch das Drücken des Dreh-Drückschalters eine bereits abgespeicherte Hubstellung ausgewählt beziehungsweise abgerufen wird und in Abhängigkeit davon das Hubwerk in diese Position gesteuert wird. Weiterhin kann auch eine Belegung des Dreh-Drückschalter durch mehrere Druckmodi vorgesehen sein. Der Dreh-Drückschalter kann beispielsweise durch einfaches beziehungsweise doppeltes oder mehrfach wiederholtes Drücken bedienbar sein.

Zudem ist es in einer vorteilhaften Ausgestaltung der erfindungsgemäßen landwirtschaftlichen Arbeitsmaschine vorgesehen, dass auf der Speichereinheit mindestens eine Bereichsinformation betreffend einen Arbeitsbereich mindestens eines der Hubwerke gespeichert oder speicherbar ist. Es ist beispielsweise denkbar, dass das Hubwerk in den unterschiedlichen Stellungen unterschiedlich belastbar ist. Derartige Bereichsinformationen können beispielsweise mittels einer unteren Grenze beziehungsweise einer oberen Grenze realisiert werden. Daher ist es vorteilhaft, bestimmte Bereichsinformationen speichern zu können, um so einen besonders sicheren Betrieb gewährleisten zu können.

In einer besonders vorteilhaften Ausgestaltung ist vorgesehen, dass die Bedieneinrichtung eine physikalische Architektur aufweist, welche dreier Informationen bedarf. Erstens ist das Hubwerk auswählbar, also ausschlussweise entweder das Fronthubwerk oder das Heckhubwerk. Zweitens ist die Position des jeweilig ausgewählten Hubwerks auswählbar und zwar beispielsweise mittels eines Dreh-Drückschalters. Drittens ist eine bereits abgespeicherte Position in der physikalischen Architektur vorgesehen, welche beispielsweise mittels des Dreh-Drückschalters zum Wiederherstellen ausgewählt werden kann. In diesem Zusammenhang kann es weiterhin vorteilhaft sein, eine Zielposition mit der aktuellen Position zu vergleichen.

Die erfindungsgemäße Eingabevorrichtung ist nachstehend anhand eines Ausführungsbeispiels, das in den Figuren dargestellt ist, näher erläutert. Es zeigt:
- Fig. 1:: eine schematische Seitenansicht einer erfindungsgemäßen landwirtschaftlichen Arbeitsmaschine;
- Fig. 2:: links: eine schematische Perspektivansicht von vorne und rechts: eine zu links korrespondierende Lichtleiste;
- Fig. 3:: links: eine schematische Perspektivansicht von hinten und rechts: eine zu links korrespondierende Lichtleiste; und
- Fig. 4:: eine schematische Detailansicht einer erfindungsgemäßen Bedieneinrichtung.

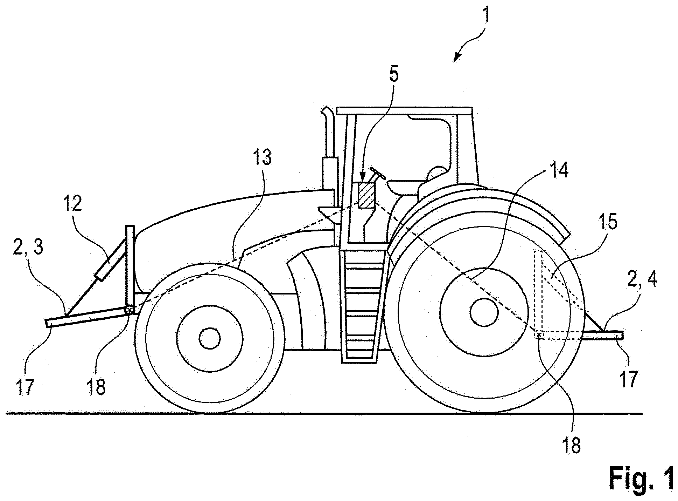

Ein Ausführungsbeispiel einer erfindungsgemäßen landwirtschaftlichen Arbeitsmaschine **1** sowie einer erfindungsgemäßen Bedieneinrichtung **5** ist in **Figur 1** dargestellt. Vorliegend handelt es sich bei der einfach auch als Arbeitsmaschine bezeichneten landwirtschaftlichen Arbeitsmaschine **1** um einen Traktor. Die Arbeitsmaschine **1** ist dazu ausgebildet, ein Anbaugerät anzukoppeln, mittels dessen ein Feld landwirtschaftlich bearbeitet werden kann. Beispielsweise handelt es sich bei dem Anbaugerät um eine Ballenpresse oder einen Häcksler. Das Anbaugerät ist aus Gründen der Übersichtlichkeit nicht dargestellt.

Je nach Art des Anbaugeräts wird dieses entweder vorne oder hinten an der Arbeitsmaschine **1** angekoppelt. Auch ist es denkbar, dass zwei Anbaugeräte gleichzeitig angekoppelt sind, eins vorne und eins hinten. Hierzu umfasst die Arbeitsmaschine **1** zwei Hubwerke **2**, nämlich ein Fronthubwerk **3** vorne sowie ein Heckhubwerk **4** hinten. Das Anbaugerät kann beispielsweise mittels einer Kupplung mit dem Fronthubwerk **3** beziehungsweise mit dem Heckhubwerk **4** verbunden werden. Mit anderen Worten kann man das Anbaugerät an das Fronthubwerk **3** beziehungsweise das Heckhubwerk **4** ankuppeln. Hierdurch kann das Anbaugerät von der Arbeitsmaschine **1** geschoben beziehungsweise gezogen werden.

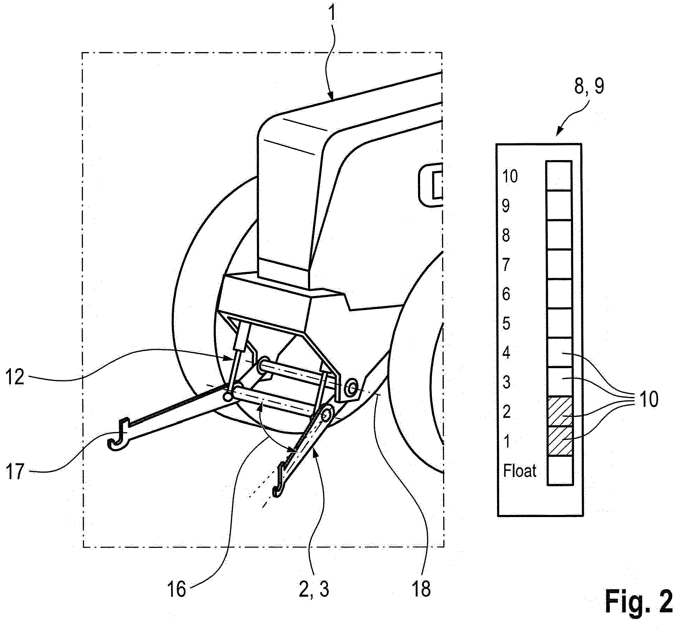

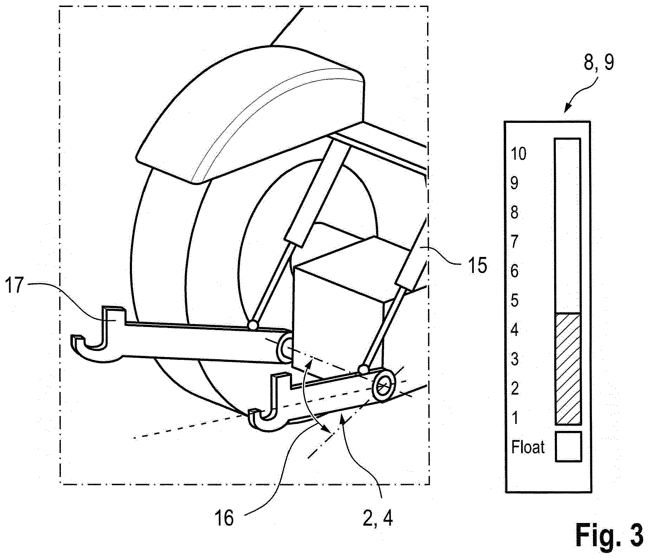

In **Figur 2** ist das Fronthubwerk **3** sowie in **Figur 3** das Heckhubwerk **4** dargestellt. Die Hubwerke **2** umfassen jeweils einen Ausleger **17**, welcher um eine Achse **18** schwenkbar gelagert ist. Die Hubwerke **2** sind wie vorliegend üblicherweise fest mit einer Karosserie der Arbeitsmaschine **1** verbunden. Weiterhin weisen die Hubwerke **2** jeweils eine Hydraulikeinrichtung **12**, **15** auf, welche mit dem jeweiligen Ausleger **17** verbunden ist und mittels derer der Ausleger **17** um die Achse **18** verschwenkbar ist.

Wie die **Figur 2** beziehungsweise **Figur 3** zeigt, ist der Ausleger **17** insbesondere in einem Arbeitsbereich **16** verschwenkbar. Mit anderen Worten ist der Ausleger **17** insbesondere zwischen einer unteren Endstellung und einer oberen Endstellung verschwenkbar. Vorliegend ist in **Figur 2** beziehungsweise **Figur 3** jeweils eine Zwischenstellung dargestellt, die näher an der unteren Endstellung ist als an der oberen Endstellung. Üblicherweise kann in dieser Zwischenstellung das Anbaugerät angekoppelt werden.

Während eines Betriebes muss der Fahrer sowohl die Arbeitsmaschine **1** als auch das etwaig angekoppelte Anbaugerät überwachen und insbesondere bedienen können. Dazu umfasst die Arbeitsmaschine **1** eine Bedieneinrichtung **5**, mittels welcher der Fahrer die Hubwerke **2** bedienen kann. Vorliegend ist zwischen den Hubwerken **2** und der Bedieneinrichtung **5** jeweils eine Datenverbindung **13**, **14** hergestellt. Mit anderen Worten ist sowohl das Fronthubwerk **3** mittels der Datenverbindung **13** als auch das Heckhubwerk **4** mittels der Datenverbindung **14** mit der Bedieneinrichtung **5** verbunden. Wie in **Figur 1** veranschaulicht ist, kann es sich bei der Datenverbindung **13**, **14** insbesondere um eine leitungslose Datenverbindung handeln.

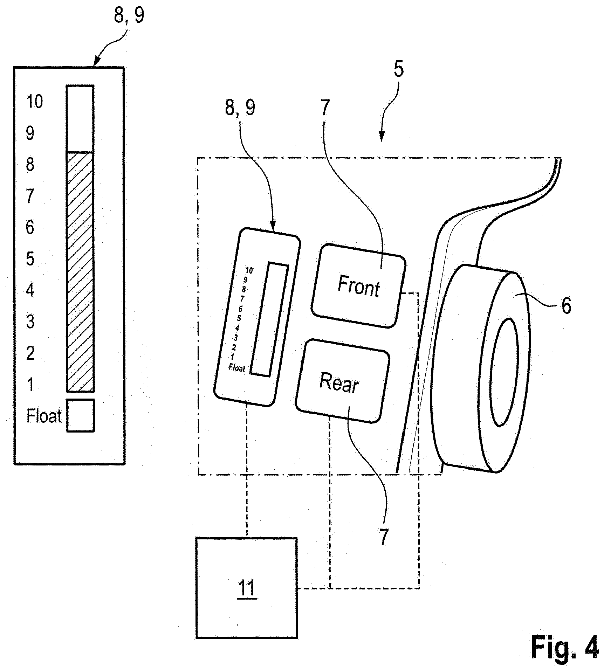

**Figur 4** zeigt die Bedieneinrichtung **5**. Die Bedieneinrichtung **5** umfasst zwei Auswahlschalter **7**, mittels welcher entweder das Fronthubwerk **3** oder das Heckhubwerk **4** ausgewählt werden kann. Eine aktuelle Auswahl kann beispielsweise wie vorliegend durch ein Visualisierungselement **8** visualisiert werden. Vorliegend ist das Visualisierungselement **8** eine Lichtleiste **9**, wobei diese eine Vielzahl von Leuchtmitteln **10** umfassen kann, wie **Figur 2** rechts zeigt. Hierbei sind die Leuchtmittel **10** in Längsrichtung der Lichtleiste **9** übereinander angeordnet.

Die Leuchtleiste **9** charakterisiert insbesondere durch die einzelnen Leuchtmittel **10**, in welcher Stellung innerhalb des Arbeitsbereiches **16** der Ausleger **17** befindlich ist. Dabei leuchten umso mehr der Leuchtmittel **10** auf, je weiter der Ausleger **17** in Richtung seiner oberen Endstellung verschwenkt ist. Mit anderen Worten ist für den Fahrer auf der Leuchtleiste **9** durch eine Anzahl der aufleuchtenden Leuchtmittel **10** indiziert, in welcher Hubstellung sich das jeweilige Hubwerk **2** aktuell befindet.

Weiterhin umfasst die Bedieneinrichtung **5** ein Bedienelement **6**, welches in **Figur 4** abgebildet und vorliegend als Drehschalter ausgebildet ist. Durch Drehen des Bedienelements **6** kann beispielsweise das Hubwerk **2** derart bedient werden, dass sich dessen Hubstellung verändert. Mit anderen Worten wird durch Drehen des Bedienelements **6** ein Absenken beziehungsweise Anheben des Hubwerks **2** bewirkt. Wieder mit anderen Worten wird durch Drehen des Bedienelements **6** der Ausleger **17** entsprechend um die Achse **18** verschwenkt.

Außerdem weist die Bedieneinrichtung **5** eine Speichereinheit **11** auf, mittels welcher beispielsweise die Stellung des Auslegers **17** abgespeichert werden kann. Bei der Speichereinheit **11** kann es sich beispielsweise um einen physischen Speicher oder eine cloudbasierte Speicherung handeln. Beispielsweise kann mittels des Bedienelements 6 ein abgespeicherter Datensatz ausgewählt und abgerufen werden.

### Bezugszeichenliste

- 1: Arbeitsmaschine
- 2: Hubwerk
- 3: Fronthubwerk
- 4: Heckhubwerk
- 5: Bedieneinrichtung
- 6: Bedienelement
- 7: Auswahlschalter
- 8: Visualisierungselement
- 9: Lichtleiste
- 10: Leuchtmittel
- 11: Speichereinheit
- 12: Hydraulikeinrichtung
- 13: Datenverbindung
- 14: Datenverbindung
- 15: Hydraulikeinrichtung
- 16: Arbeitsbereich
- 17: Ausleger
- 18: Achse

## Patentansprüche

1. Landwirtschaftliche Arbeitsmaschine (1), insbesondere in Form eines Traktors, umfassend
― ein in Form eines Fronthubwerks (3) ausgebildetes Hubwerk (2),
― ein in Form eines Heckhubwerks (4) ausgebildetes Hubwerk (2) sowie
― eine Bedieneinrichtung (5),
**dadurch gekennzeichnet, dass**
die Bedieneinrichtung (5) ein Bedienelement (6) zur Bedienung beider Hubwerke (2) umfasst,
wobei die Bedieneinrichtung (5) mindestens einen Auswahlschalter (7) umfasst, mittels dessen ein Fokus des Bedienelements (6) zwischen den Hubwerken (2) umschaltbar ist, und
wobei die Bedieneinrichtung (5) mindestens ein Visualisierungselement (8) umfasst, mittels dessen eine aktuelle Hubstellung des aktiven Hubwerks (2), auf dem der Fokus des Bedienelements (6) liegt, visualisierbar ist.

2. Landwirtschaftliche Arbeitsmaschine (1) nach Anspruch 1, **dadurch gekennzeichnet, dass** das Bedienelement (6) von einem Drehschalter gebildet ist, wobei vorzugsweise der Drehschalter als inkrementeller Drehschalter oder Endlosdrehschalter ausgebildet ist.

3. Landwirtschaftliche Arbeitsmaschine (1) nach Anspruch 1 oder 2, **dadurch gekennzeichnet, dass** das Bedienelement (6) von einem Dreh-Drückschalter gebildet ist, wobei vorzugsweise mittels Drückens des Bedienelements (6) eine Hubstellung des aktiven Hubwerks (2) einstellbar oder aktuelle Hubstellung des aktiven Hubwerks (2) speicherbar ist.

4. Landwirtschaftliche Arbeitsmaschine (1) nach einem der vorhergehenden Ansprüche, **dadurch gekennzeichnet, dass** das Visualisierungselement (8) eine Lichtleiste (9) umfasst, mittels der die aktuelle Hubstellung des jeweils aktiven Hubwerks (2) anzeigbar ist, wobei vorzugsweise die Lichtleiste (9) einen sich zwischen gegensätzlich Endstellungen des aktiven Hubwerks (2) befindlichen gesamten Arbeitsbereich desselben unterteilt in eine Mehrzahl von Stellungsschritten visualisiert.

5. Landwirtschaftliche Arbeitsmaschine (1) nach Anspruch 4, **dadurch gekennzeichnet, dass** das Visualisierungselement (8) eine Mehrzahl von balkenartig oder kreisbogenartig nebeneinander angeordneten Leuchtmitteln (10) umfasst, wobei vorzugsweise jedes Leuchtmittel (10) mit einem Stellungsschritt des aktiven Hubwerks (2) korrespondiert.

6. Landwirtschaftliche Arbeitsmaschine (1) nach einem der vorangehenden Ansprüche, **dadurch gekennzeichnet, dass** das Visualisierungselement (8) eine numerische Wiedergabe zur Wiedergabe von Zahlenwerten, insbesondere Prozentangaben oder Winkelangaben, umfasst.

7. Landwirtschaftliche Arbeitsmaschine (1) nach einem der vorangehenden Ansprüche, **dadurch gekennzeichnet, dass** das Visualisierungselement (8) dazu geeignet ist, eine aktuelle Auswahl eines der Hubwerke (2) zur Bedienung mittels des Bedienelements (6) visuell, insbesondere mittels des Wechsels einer Farbe mindestens eines mehrfarbigen Leuchtmittels (10), anzuzeigen.

8. Landwirtschaftliche Arbeitsmaschine (1) nach einem der vorangehenden Ansprüche, **gekennzeichnet durch** mindestens eine Speichereinheit (11), die mit der mittels der mindestens eine Stellungsinformation betreffend eine Hubstellung mindestens eines der Hubwerke (2) speicherbar oder gespeichert ist.

9. Landwirtschaftliche Arbeitsmaschine (1) nach Anspruch 8, **dadurch gekennzeichnet, dass** auf der Speichereinheit (11) mindestens eine Bereichsinformation betreffend einen Arbeitsbereich mindestens eines der Hubwerke (2) gespeichert oder speicherbar ist.

10. Bedieneinrichtung (5) einer landwirtschaftlichen Arbeitsmaschine (1),
**dadurch gekennzeichnet, dass**
die Bedieneinrichtung (5) ein Bedienelement (6) zur Bedienung zweier Hubwerke (2) der Arbeitsmaschine (1) umfasst,
wobei die Bedieneinrichtung (5) mindestens einen Auswahlschalter (7) umfasst, mittels dessen ein Fokus des Bedienelements (6) zwischen den Hubwerken (2) umschaltbar ist, und
wobei die Bedieneinrichtung (5) ein Visualisierungselement (8) umfasst, mittels dessen eine aktuelle Hubstellung desjenigen Hubwerks (2), auf dem der Fokus des Bedienelements (6) liegt, visualisierbar ist.
